# EUROPEAN PATENT SPECIFICATION

(11) **EP 2 066 913 B1**
(45) Date of publication and mention of the grant of the patent: **18.12.2013**
(21) Application number: 07794164.9
(22) Date of filing: 15.08.2007
(51) Int. Cl.: F16D 65/14, F16J 15/16

(54) **TELESCOPIC PROTECTION DEVICE FOR A BRAKE PISTON ROD AND VEHICLE**
TELESKOPISCHE SCHUTZVORRICHTUNG FÜR EINE BREMSKOLBENSTANGE UND FAHRZEUG
DISPOSITIF DE PROTECTION TÉLESCOPIQUE POUR UNE TIGE DE PISTON DE FREIN ET VÉHICULE

(30) Priority: 01.09.2006 SE 0601814
(43) Date of publication of application: 10.06.2009
(73) Proprietor: Scania CV AB (publ), 151 87 Södertälje (SE)
(72) Inventor: ROGGENBUCK, Philip, 640 43 Ärla (SE)
(74) Representative: Sjögren Paulsson, Stina
(86) International application number: PCT/SE2007/050554
(87) International publication number: WO 2008/026991

(56) References cited:
- GB-A- 273 237
- GB-A- 273 237
- GB-A- 2 008 205
- GB-A- 2 008 205
- GB-A- 2 251 911
- GB-A- 2 251 911
- JP-A- 1 238 704
- US-A1- 2006 118 365
- US-B1- 6 485 007

## Description

### TECHNICAL FIELD

The present invention relates to a brake comprising a protection device according to the introductory part of the attached claim 1. The invention also relates to a vehicle according to claim 6.

### BACKGROUND

Protecting a piston rod of a brake piston of a brake yoke from dirt etc. involves using, at least for trucks and buses, a rubber bellows which is adapted to protectively surrounding the piston rod and expands and contracts in the course of a reciprocating movement during a braking cycle.

A rubber bellows of this kind entails several disadvantages. For example, repeated expansion and contraction resulting in cracking over time. Moreover, the rubber ages, not least in conurbation environments and winter road salting, both of which contribute to embrittlement and cracking. Rubber is also temperature-sensitive and does not tolerate temperatures over about 250°C, which occur in, for example, urban bus operation and other warm applications. Rubber bellows of the kind indicated consequently require frequent maintenance attention and replacement.

Instead of using a rubber bellows as being susceptible to wear GB 2 008 205 A describes another type of protective cover for a hydraulic actuator. From this patent it is apparent that semi-rigid materials, such as polypropylene, cannot be used in the form of bellows. Instead it is suggested to make a protective cover of a number of telescopically arranged sleeves made of a semi-rigid material such as polypropylene.

### OBJECT OF THE INVENTION

The object of the present invention is to provide a solution to the problems described above and present a protection device which is resistant even under, in this context, extremely arduous conditions, despite long periods of exposure, with continuing overall functionality.

### SUMMARY OF THE INVENTION

The object as above is achieved with a device and a vehicle which exhibit features according to the independent claims 1 and 6 respectively.

Further advantages are afforded by features according to the dependent claims.

### BRIEF DESCRIPTION OF THE DRAWING

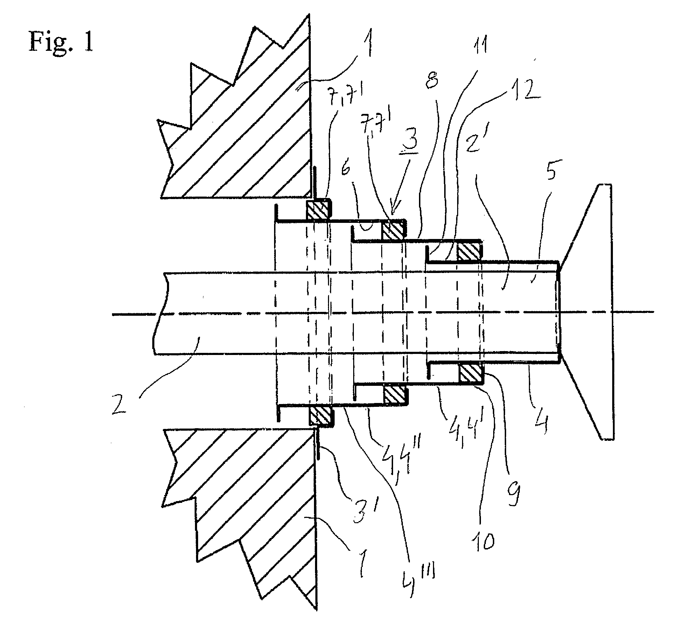

The present invention will be understood better with reference to the following detailed description read together with the attached drawing, in which the same reference notations refer to the same parts and in which
- Fig. 1 depicts schematically in axial section a first preferred embodiment of a protection device according to the present invention.

### DESCRIPTION OF PREFFERED EMBODIMENT

In Fig. 1, ref. 1 denotes part of a schematically depicted brake yoke supporting a brake piston (not depicted) with a piston rod 2 (for the sake of clarity not depicted sectionally) adapted to pressing brake blocks (not depicted) against a brake disc (not depicted), said piston rod being arranged with an outer portion 2' protruding towards the brake disc, in this case to the right in the drawing.

To protect the piston rod from, inter alia, dirt and water, a protective cover 3 is provided both for the brake yoke and for said portion of the piston rod protruding towards the brake disc and comprises and is extended by at least two telescopic metal protective element 4, but here three, mutually telescopic tubular metal protective elements 4 arranged to form a substantially watertight tube.

According to the version depicted, the protective elements 4 are of mutually increasing cross-section towards the end 5 of the piston rod which is intended to point towards the brake disc, with the result that the cross-section of the tube of the protective cover decreases progressively towards the piston rod end 5.

The protective elements being arranged in mutually sealing pairs. According to the embodiment depicted, the protective element with the larger cross-section in a pair of protective elements, a first protective element 4", as for example depicted for the protective elements 4', 4" of the pair 4', 4", has at its inner shell surface 6 a seal 7 adapted to externally, wipingly, sealing against the outer shell surface 8 of the second protective element 4' of the pair, which second protective element has a smaller cross-section than the first protective element 4", as illustrated in Fig. 1.

According to an inventive embodiment, said seal comprises a high-temperature-resistant seal 7', e.g. a Teflon seal or a graphite seal 7', which should tolerate temperatures substantially higher than 300°C.

Also according to preferred embodiments, there are protective elements which comprise an internal flange 9 at the end 10 which is intended to point towards the brake disc, an external flange 11 at the end 12 which is intended to point away from the brake disc, the flanges 9, 11 being adapted to acting as stop flanges.

It is also preferable that a corresponding seal 7, 7' be arranged at the fastening 3' of the protective cover 3 (the tube) in the brake yoke and be adapted to sealing, preferably wipingly, against the outer shell surface 8 of the protective element 4'" situated nearest to the brake yoke.

According to the invention, the protective elements are made of metal, preferably stainless steel or aluminium.

The function of the protection device according to the invention is probably substantially and sufficiently indicated above.

By means of the telescopically arranged protective elements of the protective cover (the tube), this piston rod performs in the course of its reciprocating movement a braking cycle and is sealed from the surroundings by the seals arranged between the elements. The metal protective elements are high-temperature-resistant like the seals, resulting in a non-ageing protective cover and thereby eliminating the need for maintenance and replacement.

The invention thus affords extremely substantial advantages over the state of the art.

The invention is described above in relation to preferred embodiments and embodiment examples.

Further embodiments and minor additions and modifications are of course conceivable without departing from the basic concept of the invention.

Thus embodiments are conceivable with only two protective elements, one of them fastened to, or arranged telescopically and sealingly relative to, the brake yoke, and the other arranged telescopically relative to the first and to the piston rod.

An advantage of having more than two protective element telescopic relative to the brake yoke is that the insertion length in the brake yoke is reduced.

According to preferred embodiments, devices according to the invention are intended for, inter alia, trucks and buses, particularly buses for tourist traffic in urban environments.

## Claims

1. Brake comprising a protection device and a piston rod of a brake piston of a brake yoke, the protection device comprising a protective cover that is arranged both for the brake yoke and for a portion of the piston rod which is intended to protrude towards a brake disc, and that is adapted to protectively surrounding at least the portion of the piston rod which protrudes from the brake yoke and to expanding and contracting in the course of a reciprocating movement of the piston rod, **characterised in**
- **that** the protective cover (3) comprises at least two telescopically arranged tubular metal protective element (4) forming a substantially watertight tube,
- **that** the protective elements are by means of seals (7) arranged in mutually sealing pairs,
- **that** the protective element (4") with the larger cross-section in a pair (4', 4") of protective elements has at its inner shell surface (6) a seal (7) adapted to externally, wipingly, sealing against the outer shell surface (8) of the other protective element (4') of the pair,
- **that** a corresponding seal (7, 7') is arranged at the fastening (3') of the protective cover in the brake yoke (1) and is adapted to sealing, wipingly, against the outer shell surface (8) of the protective element (4"') situated nearest to the brake yoke,
- **that** the protective elements of the protective cover are arranged to be inserted in the brake yoke and,
- **that** said seal (7) comprises a high-temperature-resistant seal (7'), which should tolerate temperatures higher than 300°C.

2. Brake comprising a protection device according to claim 1, **characterised in that** the protective elements are of mutually increasing cross-section in the direction away from the end (5) of the piston rod which points towards the brake disc.

3. Brake comprising a protection device according to any one of claims 1-2, **characterised in that** it comprises protective elements which have an internal flange (9) at the end (10) which is intended to point towards the brake disc, and an external flange (11) at the end (12) which is intended to point away from the brake disc, which flanges are adapted to acting as stop flanges.

4. Brake comprising a protection device according to any one of claims 1-3, **characterised in that** said protective elements (4) are made of stainless steel or aluminium.

5. A vehicle, **characterised in that** it comprises a brake comprising a protection devices according to any of claims of 1-4.

6. A vehicle according to claim 5, **characterised in that** it is a bus or a truck.

## Patentansprüche

1. Bremse, umfassend eine Schutzvorrichtung und eine Kolbenstange eines Bremskolbens eines Bremssattels, wobei die Schutzvorrichtung eine Schutzabdeckung umfasst, die sowohl für den Bremssattel als auch für einen Abschnitt der Kolbenstange angeordnet ist, der dazu vorgesehen ist, in Richtung einer Bremsscheibe hervorzustehen, und die dazu eingerichtet ist, zumindest denjenigen Abschnitt der Kolbenstange schützend zu umgeben, der von dem Bremssattel hervorsteht, und im Laufe einer Hin- und Her-Bewegung der Kolbenstange zu expandieren und sich zusammenzuziehen,
**dadurch gekennzeichnet,**
- **dass** die Schutzabdeckung (3) wenigstens zwei teleskopartig angeordnete rohrförmige metallische Schutzelemente (4) umfasst, die ein im Wesentlichen wasserdichtes Rohr bilden,
- **dass** die Schutzelemente mittels Dichtungen (7) als gegenseitig dichtende Paare angeordnet sind, .
- **dass** das Schutzelement (4") mit dem größeren Querschnitt aus einem Paar (4', 4") von Schutzelementen an seiner inneren Mantelfläche (6) eine Dichtung (7) aufweist, die dazu eingerichtet ist, gegen die äußere Mantelfläche (8) des anderen Schutzelements (4') des Paares nach außen abstreifend abzudichten,
- **dass** eine korrespondierende Dichtung (7, 7') an der Befestigung (3') der Schutzabdeckung in dem Bremssattel (1) angeordnet ist und dazu eingerichtet ist, gegen die äußere Mantelfläche (8) des Schutzelements (4"'), das am nächsten zu dem Bremssattel angeordnet ist, abstreifend abzudichten,
- **dass** die Schutzelemente der Schutzabdeckung derart angeordnet sind, dass sie in den Bremssattel einführbar sind, und
- **dass** die Dichtung (7) eine hochtemperaturbeständige Dichtung (7') umfasst, die Temperaturen von mehr als 300° C aushält.

2. Bremse umfassend eine Schutzvorrichtung gemäß Anspruch 1,
**dadurch gekennzeichnet, dass** die Schutzelemente in einer von demjenigen Ende (5) der Kolbenstange, das in Richtung der Bremsscheibe zeigt, wegweisenden Richtung einen gegenseitig zunehmenden Querschnitt aufweisen.

3. Bremse umfassend eine Schutzvorrichtung gemäß einem der Ansprüche 1 bis 2,
**dadurch gekennzeichnet, dass** sie Schutzelemente umfasst, die einen inneren Flansch (9) an dem Ende (10) aufweisen, das dazu vorgesehen ist, in Richtung der Bremsscheibe zu zeigen, und einen äußeren Flansch (11) an dem Ende (12), das dazu vorgesehen ist, von der Bremsscheibe wegzuweisen, wobei die Flansche dazu ausgebildet sind, als Anschlagsflansche zu dienen.

4. Bremse umfassend eine Schutzvorrichtung nach einem der Ansprüche 1 bis 3,
**dadurch gekennzeichnet, dass** die Schutzelemente (4) aus rostfreiem Stahl oder Aluminium hergestellt sind.

5. Fahrzeug,
**dadurch gekennzeichnet, dass** es eine Bremse umfassend eine Schutzvorrichtung gemäß einem der Ansprüche 1 bis 4 umfasst.

6. Fahrzeug gemäß Anspruch 5,
**dadurch gekennzeichnet, dass** es ein Bus oder ein Lastkraftwagen ist.

## Revendications

1. Frein comprenant un dispositif de protection et une tige de piston d'un piston de frein d'un étrier de frein, le dispositif de protection comprenant un cache de protection qui est prévu aussi bien pour l'étrier de frein que pour la partie de la tige de piston devant saillir en direction d'un disque de frein et qui est apte à entourer et à protéger au moins la partie de la tige de piston qui émerge de l'étrier de frein et qui s'allonge et se contracte dans le cours d'un mouvement alternatif de la tige de piston, **caractérisé en ce que**
- le cache de protection (3) comprend au moins deux éléments de protection métalliques tubulaires (4) montés télescopiquement et qui forment un tube pratiquement étanche à l'eau,
- les éléments de protection sont disposés par paires d'éléments qui sont montés à joint étanche l'un par rapport à l'autre au moyen de garnitures d'étanchéité (7),
- l'élément de protection (4") qui a la plus grande section transversale dans une paire (4', 4") d'éléments de protection porte sur sa face de coque intérieure (6) une garniture d'étanchéité (7) apte à former un joint étanche extérieur frottant contre la surface de coque extérieure (8) de l'autre élément de protection (4') de la paire,
- une garniture d'étanchéité correspondante (7, 7') est montée à la fixation (3') du cache de protection dans l'étrier de frein (1) et est apte à former un joint étanche frottant contre la surface de coque extérieure (8) de l'élément de protection (4"') qui est situé le plus près de l'étrier de frein,
- les éléments de protection du cache de protection sont agencés pour pouvoir être rentrés dans l'étrier de frein et,
- ladite garniture d'étanchéité (7) constitue une garniture d'étanchéité à haute résistance à la température (7') qui doit pouvoir supporter des températures supérieures à 300 °C.

2. Frein comprenant un dispositif de protection selon la revendication 1, **caractérisé en ce que** les éléments de protection sont de section transversale de plus en plus grande en s'éloignant de l'extrémité (5) de la tige de piston qui pointe vers le disque de frein.

3. Frein comprenant un dispositif de protection selon une quelconque des revendications 1 à 2, **caractérisé en ce qu'**il comprend des éléments de protection qui ont un rebord intérieur (9) à l'extrémité (10) qui est prévue pour pointer vers le disque de frein, et un rebord extérieur (11) à l'extrémité (12) qui est prévue pour pointer dans le sens qui s'éloigne du disque de frein, lesdits rebords étant aptes à jouer le rôle de rebords de butée.

4. Frein comprenant un dispositif de protection selon une quelconque des revendications 1 à 3, **caractérisé en ce que** lesdits éléments de protection (4) sont faits d'acier inoxydable ou d'aluminium.

5. Véhicule **caractérisé en ce qu'**il comprend un frein qui comporte un dispositif de protection selon une quelconque des revendications 1 à 4.

6. Véhicule selon la revendication 5, **caractérisé en ce qu'**il est un autobus ou un camion.
